# EUROPEAN PATENT APPLICATION

(11) **EP 2 007 037 A1**
(43) Date of publication of application: **24.12.2008**
(21) Application number: 07110757.7
(22) Date of filing: 21.06.2007
(51) Int. Cl.: H04B 10/135, H04B 10/18, H04B 10/155, H04J 14/02

(54) **Polarization modulation scheme for intra-channel non-linear suppression**

(71) Applicant: Acreo AB, 164 40 Kista (SE)
(72) Inventor: Forzati, Marco, 117 38, Stockholm (SE); Berntson, Anders, 141 41, Huddinge (SE); Mårtensson, Jonas, 120 68, Stockholm (SE)
(74) Representative: Engdahl, Stefan

(57) **Abstract**

A method for modulating the polarization of a plurality of adjacent wavelength channels in a WDM transmission link and an optical transmitter for use in an optical transmission network. The method comprises the step of modulating the polarization of a plurality of adjacent channels in said WDM transmission link with a single modulator. The modulator applies the same time varying polarization shift to each of said plurality of adjacent channels.

## Description

### Technical Field of the Invention

The present invention relates to a method for modulating the polarization of a plurality of adjacent wavelength channels in a WDM transmission link and to an optical transmitter for use in an optical transmission network.

### Background Art

Optical wavelength division multiplexing (WDM) allows the transmission of several wavelength channels on a single fiber. Existing WDM transmission systems typically operate at data rates up to 10 Gb/s per channel. A growing demand for information exchange is leading to a shortage of capacity in existing transmission systems. A cost-effective and flexible solution to this problem is to add (or replace 10-Gb/s channels with) 40-Gb/s channels in transmission systems where more capacity is needed. In order for this solution to be inexpensive and flexible, the 40-Gb/s signals must be successfully transmitted on wavelength-division multiplexed (WDM), dispersion-managed (DM) transmission links designed and optimized for 10-Gb/s signals. This poses some challenges in terms of filtering, dispersion, and especially non-linear effects.

In a WDM transmission system which uses on-off-keying (OOK), in which data is encoded in the signal amplitude, the main non-linear effects at 40 Gb/s are intra-channel cross-phase modulation (IXPM), which causes timing jitter, and intra-channel four-wave mixing (IFWM), which causes ghost pulses and amplitude jitter. IXPM can be reduced by proper dispersion pre-compensation, while IFWM, which is a phase-sensitive process, may be reduced using phase modulation of some sort. Several techniques to add redundant phase modulation to OOK-type signals have been studied in the past few years.

However, recently phase modulation formats or phase shift keying (PSK), such as DPSK and DQPSK, have become very popular, thanks to their better receiver sensitivity and spectral efficiency. Since the information is encoded in the signal phase, IFWM can no longer be reduced by adding redundant phase modulation because this would degrade the signal quality and thereby rendering it harder to decode the transmitted information.

Another way to decrease the impact of intra-channel non-linear effects, is alternate-polarization (APol) modulation format, in which the state of polarization of a signal alternates between two values in neighboring bit slots. This reduces the interactions between different pulses within a channel, because the efficiency of non-linear interactions between pulses is reduced when the pulses are in different polarization states. In this scheme, the polarization modulation is synchronized with the data modulation rate. Hence, the polarization modulation have to be applied to each channel individually.

This method is described in US-patent 5 526 162, which discloses a method and apparatus for modulating the polarization of an optical signal. A polarization modulator receives an optical signal, which has been data modulated at a predetermined data modulation frequency. The polarization modulator modulates the state of polarization of the optical signal at a frequency, that is phase locked and equal to the data modulation frequency. In the method according to the abovementioned US-patent each polarization modulator operates at one signal at a time and that the number of modulators is equal to the number of wavelength channels. It is therefore desirable to develop a technique that increases the non-linear tolerance, especially due to intra-channel four-wave-mixing (IFWM), of a plurality of channels in a WDM transmission link at the same time.

US-patent 5 841 557 discloses a method and apparatus for scrambling the polarization of signal lights with respect with each other, in order to reduce interaction between different channels. In one of the configurations proposed, the signal lights, after being data modulated, are combined into a wavelength division multiplexed signal light. Then the combined wavelength division multiplexed signal light is polarization modulated by a polarization dependent polarization scrambler. The signals are generated in such a way that odd channels have a polarization state which is orthogonal to that of even channels. If the polarization scrambler is properly aligned, the incoming odd channels will be polarization modulated at a different extent than the even channels. Consequently neighboring channels will acquire a mutual polarization scrambling in time, so that the inter-channel non-linear interactions is reduced.

Patent JP2004289751 discloses another method for achieving polarization scrambling of channels in a WDM system with respect to each other, in order to reduce inter-channel four-wave-mixing interaction between different channels. A single polarization dependent polarization modulator is used. The different channels at the input of the polarization modulator are in different states of polarization. Consequently, the adjacent channels are polarization modulated by different amounts.

### Summary of the Invention

An object of the present invention is to reduce distortion due to intra-channel non-linear effects of data modulated optical signals in a plurality of wavelength channels in a WDM transmission link, by simultaneously modulating the state of polarization (SOP) of said plurality of channels by an equal amount. This is obtained by means of one polarization modulator driven by a periodic electrical signal. The resulting polarization modulation will necessarily be asynchronous for each of the channels, because each one of the channels is in general timed by different clock signals.

This object is met by the method and the optical transmitter as set forth in the appended independent claims.

In a first aspect of the present invention, there is provided a method for modulating the polarization of a plurality of wavelength channels in a WDM transmission link, comprising the step of modulating the polarization of a plurality of adjacent channels in said WDM transmission link with a single modulator. The modulator applies the same time varying polarization shift to each of said plurality of adjacent channels, whereby consecutive bits or consecutive groups of bits in each wavelength channel assume alternating polarization shifts.

In a second aspect of the present invention, there is provided an optical transmitter for use in an optical transmission network. The optical transmitter comprises a plurality of optical signal sources for generating data modulated optical signals, wherein each optical signal source represents a channel in a WDM transmission link, a multiplexer connected to each of said sources for receiving said data modulated optical signals and transmitting said data modulated optical signals over said WDM transmission link, means for modulating the polarization of said data modulated optical signals. Said means for modulating the polarization of said optical signals is arranged to cause a plurality of adjacent data modulated optical signals to acquire the same time varying polarization shift, thereby causing consecutive bits or consecutive groups of bits in each channel to assume alternating polarization shifts.

An idea of the invention is to asynchronously modulate the polarization of a plurality of adjacent channels in the WDM transmission link simultaneously. Each channel comprises an optical signal at a certain wavelength and has been data modulated to carry information over the transmission link. Because of the asynchronous modulation there will, in some parts of each signal, exist conditions in which the polarizations of neighboring (consecutive) bits or neighboring (consecutive) groups of bits are at least partially aligned. In other parts of the signal, there will exist other conditions in which the polarizations of neighboring bits or groups of bits are orthogonal. In conditions in which the polarizations of neighboring bits or groups of bits are orthogonal, there will be maximum reduction of the impact of intra-channel non-linear effects, while in conditions in which the polarizations of neighboring bits or groups of bits are partially aligned, there will be a lesser reduction of the impact of intra-channel non-linear effects. On an average, since the signal alternates between the conditions relatively fast, there will be a performance improvement which in general is equal to the average between the best and the worst cases. As a consequence, when considering a plurality of adjacent channels in a WDM transmission link, the influence of intra-channel non-linear effects within each channel will be reduced.

It is to be noted that the terms "signal" and "channel" have been used interchangeably throughout this description. A channel is a light wave at a specific wavelength. A signal is also a light wave, having a specific wavelength. It shall also be understood that the term "pulse" has been used to describe a portion of a "signal" or "channel".

In embodiments of the invention, the data modulation of the signals is performed using the On-Off-Keying-modulation (OOK) technique, in which information is carried by the signal amplitude. Variations in signal amplitude due to noise and amplitude jitter caused by intra-channel non-linear impairments like IFWM will lead to a degradation in transmission quality.

In other embodiments of the invention, the data modulated signals are performed using the phase-shift-keying (PSK) technique. In a PSK communication system, information is carried by the signal phase. Variations in signal amplitude in a PSK system, due to noise and IFWM-generated amplitude jitter, can be translated into variation in signal phase, due to self-phase modulation (SPM) and cross-phase modulation (XPM). Thus, by applying the method according to embodiments of invention and thereby reducing the impact of IFWM-generated ghost pulses, an improvement in signal quality in PSK communication systems is expected.

Optionally, in embodiments of the invention, the data modulated signals are performed using phase and amplitude shift keying.

In further embodiments of the invention, the modulation rate is set to half the bit rate (of the channel for which intra-channel non-linear impairments are strongest), since the impact of interactions between pulses within a channel is strongest between pulses that are immediate neighbors. Preferably, the modulation rate is set to half the bit rate of the channel with the highest bit rate, since the impact of intra-channel non-linear impairments is expected to be higher for higher bit rates (at least in the 10 Gb/s-1 00 Gb/s range). The channel is to be selected among said plurality of adjacent channels in the WDM transmission link. In other embodiments of the invention, the modulation rate is set to less than haft the bit rate of the channel for which intra-channel non-linear impairments are strongest or, preferably, of the channel with the highest bit rate as described above.

In still further embodiments of the invention, the polarization shift of each one of said plurality of adjacent channels is of an equally sized amount. In this manner, all of said plurality of adjacent channels are polarization modulated by the same extent at each point in time. In other words, the modulator for modulating the polarization applies the same time varying polarization shift at any given point in time to each of said plurality of adjacent channels.

In embodiments of the invention, a polarization dependent polarization modulator is employed. In this case each channel, i.e. optical signal or light pulse, must have the same or similar SOP at the input of the polarization modulator in order to impress the same amount of polarization modulation in all channels, whereby maximum reduction of non-linear effects due to IFWM is achieved for all channels.

Alternatively, in other embodiments of the invention, a polarization independent polarization modulator is employed. An advantage with the use of a polarization-independent polarization modulator is that the incoming signals may have arbitrary polarization states.

It is to be understood that a polarization dependent polarization modulator modulates the SOP of the incoming signals differently, depending on their SOP, e.g. a first signal may be shifted 90° while another signals having a different SOP than the first signal may be shifted another amount or even not shifted at all. Further, a polarization independent polarization modulator modulates the SOP of the incoming signals an equal amount independent of their SOP, e.g. a first signal may be shifted 90° and a second signal may be shifted 90° as well, even though the second signal has a different SOP than the first signal, when arriving at the modulator.

Furthermore, it is preferred that the waveform of the modulation signal is periodical. For example, a sinusoidal waveform, which is simple to generate, is employed.

### Brief Description of the Drawings

The various aspects of the invention, including its particular features and advantages, will be understood from the following detailed description and the accompanying drawings, on which:
Fig. 1 is a block diagram of an optical transmitter according to an embodiment of the invention;
Fig. 2 shows, for a synchronous case, a 3D-diagram indicating the polarization states of pulses in a signal as a function of time, and a 2D-diagram illustrating the polarization drive signal (having a frequency which is half the bit rate) applied on the polarization modulator as a function of time, where V₀ is the voltage amplitude which, when applied to the polarization modulator, causes the SOP of light at the output of the modulator to be orthogonal to the SOP of the incoming light;
Fig. 3 shows, for an asynchronous case, a 3D-diagram indicating the polarization states of pulses in a signal as function of time, and a 2D-diagram illustrating the polarization drive signal (having a frequency which is near half the bit rate) as a function of time;
Fig. 4 is a diagram in which the Bit-Error-Rate is plotted against the amplitude of the polarization modulation drive voltage for synchronous polarization modulation, for optimum phase delay between the signal and the polarization drive voltage (i.e. phase delay=O, as is the case in the example in Fig. 2), where V₀ is the drive voltage which, when applied to the polarization modulator, causes the SOP of light at the output of the modulator to be orthogonal to the SOP of the incoming light;
Fig. 5 is a diagram in which the Bit-Error-Rate is plotted against the phase delay, for polarization modulation drive voltage amplitude equal to V₀; and
Fig. 6 illustrates an example of how to implement means for modulating the polarization.

### Detailed Description of Embodiments of the Invention

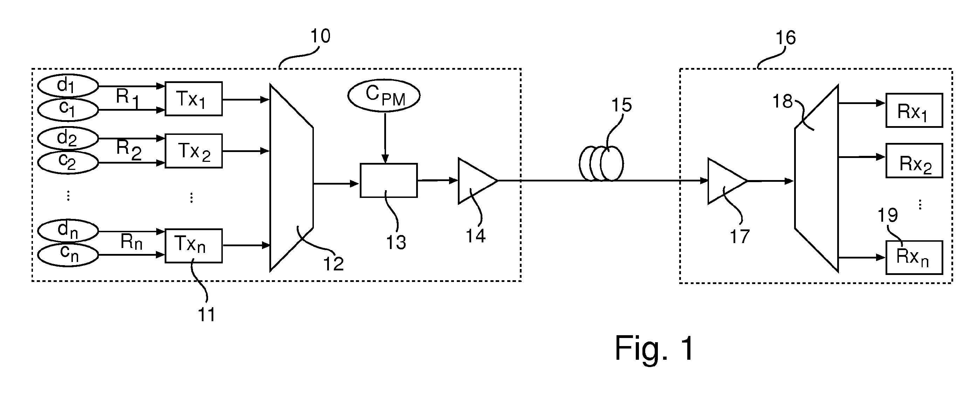

In Fig. 1, there is shown an apparatus 10 for transmitting an optical signal that includes a number of optical transmitters Tx_{1...n}, a wavelength multiplexer 12, a polarization modulator 13 and an amplifier 14. Each optical transmitter Tx_{1...n} is clocked by a specific clock signal c_{1...n} and it generates an optical signal, which is modulated by an electrical data signal d_{1...n} at bit rate R_{1...n}, to be transmitted on a specific channel in a wavelength-division multiplexing (WDM) transmission system. The clock rate is typically in the range above 1 GHz. Each transmitter is connected to an input port of the multiplexer 12, in which all connected signals are combined into one single multiplexed signal to be transmitted on one optical fiber link 15. The link 15 may contain optical amplifiers and other equipment to increase signal robustness or to process information. The multiplexed signal is then polarization modulated by a polarization modulator 13, which is controlled by a periodic signal c_{PM} at a frequency f_{PM} and is coupled to the output port of the wavelength multiplexer and to the input port of the booster amplifier 14. The polarization modulator may also be placed after the amplifier 14.

Further, in Fig. 1, there is shown an apparatus 16 for receiving an optical signal after the link 15. The polarization modulator can in fact be placed anywhere along the link 15, although its effectiveness is highest when it is placed at the transmitter 10. The apparatus 16 comprises an amplifier 17, a demultiplexer 18 and a number of optical receivers Rx_{1...n} for receiving and converting the optical signals to electrical signals.

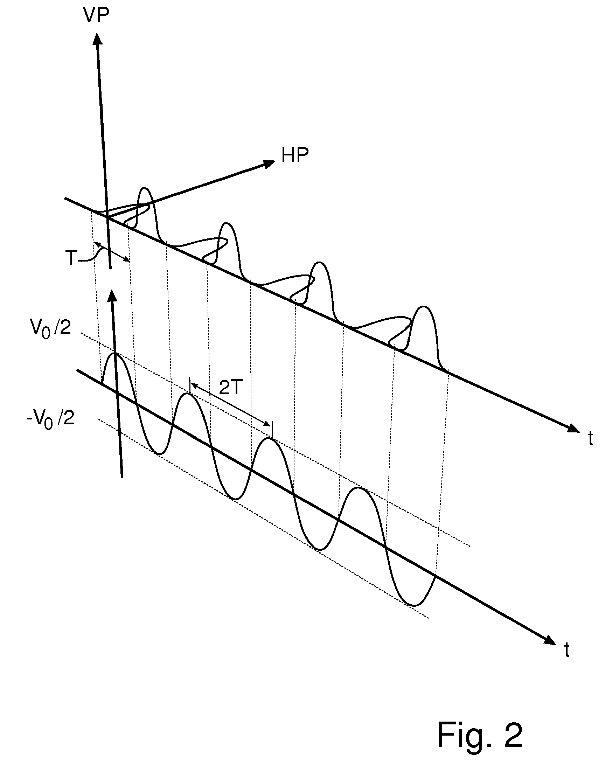

Referring to Fig. 2, there is shown a 3D-diagram and a 2D-diagram for explaining synchronous polarization modulation at a modulation frequency of B/2, where "B" is the bit rate of the channel.

The upper diagram illustrates the polarization of the pulses. In this example, the pulses are substantially Gaussian. For simplicity of illustration, linear SOP only are considered here, and vertical polarization and horizontal polarization is along the VP- and the HP-axis, respectively. Reference character "T" denotes the duration of the bit (T=1/B). The first pulse in the upper diagram is aligned with the HP axis, i.e. it is horizontally polarized. The second pulse is aligned with the VP axis, i.e. it is vertically polarized. Every other of the following pulses lie in either the vertical or the horizontal polarization plane, as described for the first and the second pulse.

Further, in the lower diagram of Fig. 2, there is shown the polarization modulation drive signal, which in this example is in the form of a sinusoidal wave. The reference characters "V₀/2" and "-V₀/2" denote the maximum and minimum drive levels, where V₀ is the drive voltage that causes the SOP at the output of the modulator to be orthogonal to the SOP at the input. In the example depicted in the figure the signal's SOP at the input of the modulator is linear and constant. After going through the modulator, which is driven by a sinusoidal signal with amplitude V₀, the SOP of the signal alternates bitwise between two orthogonal SOP (horizontal and vertical in the example). From the Figures, it is evident that for the synchronous case, the polarization changes between two values, every second bit having equal polarization. Since the polarization modulation is synchronous, there will be no intermediate conditions.

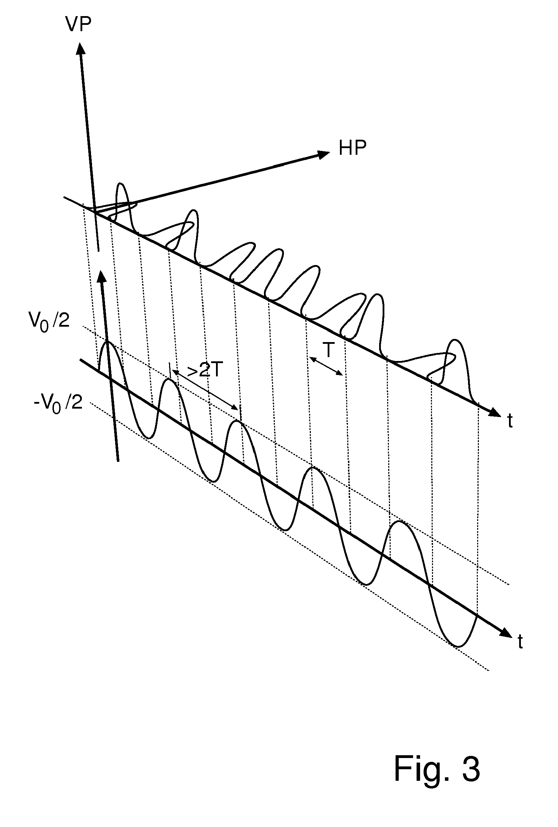

Furthermore, in Fig. 3, there is shown a 3D-diagram and a 2D-diagram for explaining asynchronous polarization modulation at a modulation frequency slightly less than half the bit rate of any one of the channels. The same reference characters as in Fig. 2 have been used when applicable.

In the upper diagram of Fig. 3, as for the synchronous case, the first and the second pulse are vertically and horizontally polarized, respectively. As can be seen in the Fig. 3, the pulses and the polarization modulation drive signal are slightly off pace, i.e. the period of the drive signal is slightly longer than two times the bit duration. As a result, a number of the following pulses are neither completely vertically polarized nor completely horizontally polarized. Instead, in these portions of the signal, two neighboring pulses acquire intermediate conditions between the completely horizontally polarized state and the completely vertically polarized state. It is to be observed that, in the beginning of the shown sequence, the pulses being in intermediate conditions gradually deviate from the vertically and horizontally polarized states, but towards the end of the shown sequence the pulses gradually approach and finally reach the completely horizontally and vertically polarized conditions again.

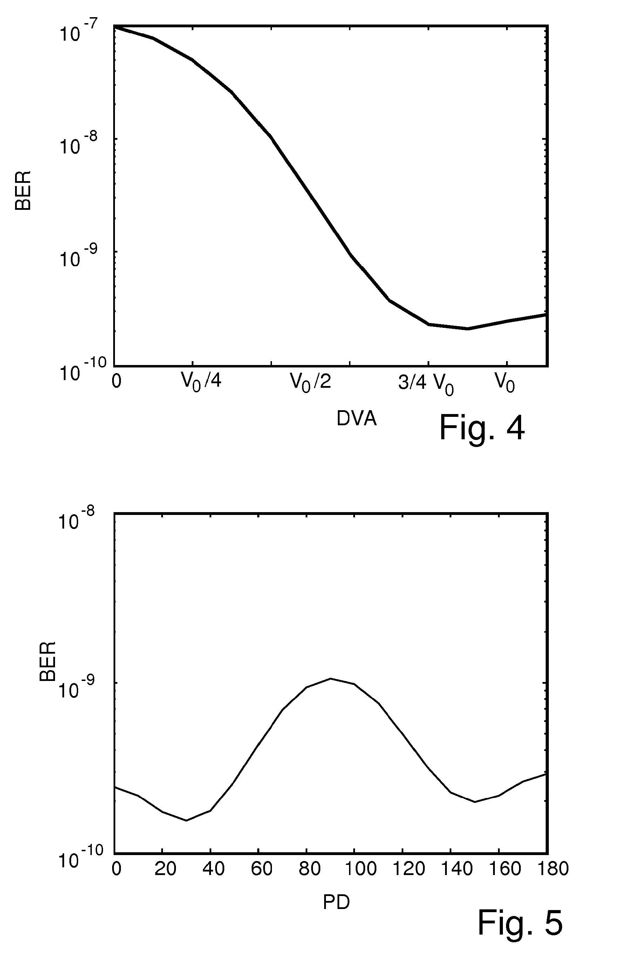

With reference to Fig. 4, a diagram presenting the Bit-Error-Rate (BER) as a function of amplitude of the signal driving the polarization modulator (drive voltage amplitude, DVA) is shown. From the Figure, it can be seen that for polarization modulation drive voltages above approximately 3/4V₀ and up to V₀, the signal quality is optimized. A value of V₀ causes the SOP of the outgoing light to be orthogonal to the SOP of the incoming light (a polarization shift of 90° in the case of linearly polarized light).

Furthermore, in Fig. 5, there is shown a diagram, in which the Bit-Error-Rate (BER) is plotted against the phase delay (PD) between the data pulse centers and the peaks of the polarization modulating wave, measured in degrees, for a numerical simulation in which a synchronously polarization modulated signal is transmitted over a fiber transmission link. The diagram shows clearly that the Bit-Error-Rate is substantially improved (by two orders of magnitude) for all values of phase delay, although improvement is dependent on the specific value of phase delay. This is explained with the fact that when pulses and polarization modulation are aligned (phase delay 0° and 180°), neighboring pulses have orthogonal SOP, and therefore the suppression of intra-channel non-linear effects is maximized. The worst phase delay is 90°, which causes the centers of neighboring pulses to have the same SOP. Some degree of improvement is achieved because the tails of neighboring pulses have orthogonal SOP. In the simulation BER is improved two orders. In the case of asynchronous polarization modulation, some portions of the signal are in full polarization alternation (phase delay 0°or 180°) while other portions are in a situation of "full misalignment" in which neighboring pulses have the same SOP at the pulse center and orthogonal SOP only at the tails (phase delay 90°). Consequently, the degree of suppression of intra-channel non-linear for asynchronous polarization modulation will be between what is achieved for synchronous alternate polarization with optimum phase delay and what is achieved with full misalignment.

Means for achieving polarization modulation are know in the art. In the following, an example for realizing polarization modulation is briefly described.

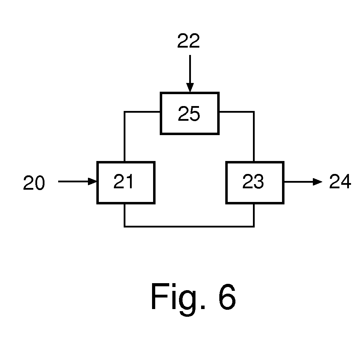

According to Fig. 6, a means for achieving polarization modulation is illustrated. A light signal 20 is split into two orthogonal polarization components with a polarization beam splitter 21. Then phase modulation is introduced on one of the components by means of a phase modulator 25 driven by a periodic signal 22. Thereafter, the polarization components are combined with a polarization beam combiner 23. The output pulse sequence 24 is then transmitted onto a transmission link (again, not shown).

It should be noted that the present invention has been illustrated using exemplifying embodiments. However, as is appreciated by a person skilled in the art, other embodiments than the ones disclosed above are also contemplated within the scope of the present invention, which is defined by the appended claims.

## Claims

1. A method for modulating the polarization of a plurality of wavelength channels in a WDM transmission link, comprising the step of:
modulating the polarization of a plurality of adjacent channels in said WDM transmission link with a single modulator, wherein said modulator applies the same time varying polarization shift to each of said plurality of adjacent channels, whereby consecutive bits or consecutive groups of bits in each wavelength channel assume alternating polarization shifts.

2. The method according to claim 1, wherein said modulation is asynchronous with respect to the frequencies of said plurality of adjacent channels.

3. The method according to any one of the preceding claims, wherein
each of said plurality of adjacent channels comprises a light signal, wherein each light signal has the same state of polarization before said step of modulating the polarization, and
said asynchronous polarization modulation is achieved by a polarization dependent modulator.

4. The method according to claim 1 or 2, wherein said asynchronous polarization modulation is achieved by a polarization independent modulator.

5. The method according to any one of the preceding claims, wherein the polarization modulation signal has a sinusoidal waveform.

6. The method according any one of the preceding claims, wherein said modulation rate is set to approximately half the bit rate of any one of the channels.

7. The method according to claim 6, wherein said any one of the channels is a channel for which intra-channel non-linear impairments are strongest, said channel being selected among said plurality of channels in said WDM transmission link.

8. The method according to claim 6 or 7, wherein said any one of the channels is a channel with the highest bit rate, said channel being selected among said plurality of channels in said WDM transmission link.

9. The method according to any one of the preceding claims, further comprising a step of:
multiplexing said plurality of wavelength channels into said WDM transmission link prior to said asynchronous polarization modulation.

10. The method according to claim 9, further comprising a step of:
data modulating said wavelength channels using OOK-modulation, prior to said step of multiplexing said plurality of wavelength channels.

11. The method according to claim 9, further comprising a step of:
data modulating said wavelength channels using PSK-modulation, prior to said step of multiplexing said plurality of wavelength channels.

12. The method according to claim 9, further comprising a step of:
data modulating said wavelength channels using phase and amplitude shift keying, prior to said step of multiplexing said plurality of wavelength channels.

13. The method according to any one of the preceding claims, wherein the polarization modulation rate is in the GHz range.

14. An optical transmitter for use in an optical transmission network, comprising:
a plurality of optical signal sources for generating data modulated optical signals, each optical signal source representing a channel in a WDM transmission link,
a multiplexer connected to each of said sources for receiving said data modulated optical signals and transmitting said data modulated optical signals over said WDM transmission link,
means for modulating the polarization of said data modulated optical signals, and said means for modulating the polarization of said optical signals is arranged to cause a plurality of adjacent data modulated optical signals to acquire the same time varying polarization shift, thereby causing consecutive bits or consecutive groups of bits in each channel to assume alternating polarization shifts.

15. The optical transmitter according to claim 14, wherein said data modulated optical signals are modulated using OOK-modulation.

16. The optical transmitter according to claim 14, wherein said data modulated optical signals are modulated using PSK-modulation.

17. The optical transmitter according to claim 14, wherein said data modulated optical signals are modulated using phase and amplitude shift keying.

18. The optical transmitter according to any one of claims 14-17, wherein said modulation rate is arranged to be set to approximately half the bit rate of any one of the channels.

19. The optical transmitter according to claim 18, wherein said any one of the channels is a channel for which intra-channel non-linear impairments are strongest, said channel being selected among the channels in said transmission link.

20. The optical transmitter according to claim 18 or 19, wherein said any one of the channels is a channel with the highest bit rate among the channels in said transmission link.

21. The optical transmitter according to any one of claims 14-20, wherein the polarization modulator is connected to an output, providing a multiplexed optical signal, of said multiplexer, whereby said plurality of optical signals are arranged to be polarization modulated simultaneously.

22. The optical transmitter according to any one of claims 14-21, wherein the optical amplifier is connected to an output, providing a polarization modulated signal, of the polarization modulator.

23. The optical transmitter according to any one of claims 14-22, wherein said means for modulating the polarization is a polarization modulator.

24. The optical transmitter according to any one of claims 14-23, wherein the modulation rate is in the GHz-range.
